# EUROPÄISCHE PATENTSCHRIFT

(11) **EP 3 991 940 B1**
(45) Veröffentlichungstag und Bekanntmachung des Hinweises auf die Patenterteilung: **01.04.2026**
(21) Anmeldenummer: 20205555.4
(22) Anmeldetag: 03.11.2020
(51) Int. Cl.: B29C 45/06, B29C 45/14, B29C 45/04, B29C 33/00, B29C 45/17, B29C 45/26, B29C 45/73

(54) **ANSPRITZVORRICHTUNG MIT DREHTISCH UND DREIGETEILTER SCHLIESSSEITE**
INJECTION DEVICE WITH ROTARY TABLE AND CLOSING SIDE WITH THREE SECTIONS
DISPOSITIF D'INJECTION POURVU DE TABLE ROTATIVE ET CÔTÉ FERMETURE EN TROIS PARTIES

(43) Veröffentlichungstag der Anmeldung: 04.05.2022
(73) Patentinhaber: Stefan Pfaff Werkzeug- und Formenbau GmbH Co KG, 88167 Röthenbach im Allgäu (DE)
(72) Erfinder: SUTTER, Anton, 88178 Simmerberg (DE)
(74) Vertreter: RavensPAT Patentanwälte Partnerschaft mbB

(56) Entgegenhaltungen:
- WO-A1-2017/132382
- CN-A- 111 688 108
- DE-T2- 69 209 408
- DE-T2- 69 732 217
- JP-A- 2002 079 611
- JP-A- S60 154 021
- JP-A- S62 278 016
- US-A- 5 566 510

## Beschreibung

Die Erfindung betrifft eine Anspritzvorrichtung zur Bearbeitung von Profilen, insbesondere zum Anspritzen von Teilprofilen, Endabschnitten oder dergleichen, nach dem Anspruch 1.

Aus dem Stand der Technik, beispielsweise aus den Druckschriften JP S60-154021 A, WO 2017/132382 A1 und DE 692 09 408 T2, sind zahlreiche Anspritzvorrichtungen und Anspritzverfahren bekannt. Aufgrund der komplexen mechanischen Eigenschaften biegeschlaffer Profile, wie sie beispielsweise für Türdichtungen bei Fahrzeugen eingesetzt werden, und der andererseits hohen Anforderungen an die Genauigkeit beim Fertigungsprozess bedient man sich zwischen einzelnen Bearbeitungsschritten eines manuellen Handlings bzw. einer manuellen Logistik, um die entsprechenden Profile von einem Bearbeitungsschritt zum nächsten zu überführen. Beispielsweise werden nach einem Bearbeitungsschritt wie der Extrusion einzelner, noch weiter zu bearbeitender Profile (Profilrohlinge) oder nach der Durchführung von Schneidvorgängen an den Profilen diese jeweils durch eine Bedienperson manuell aus der Form genommen bzw. in eine neue Form eingelegt, um die Profile von der vorangegangenen Bearbeitung zum nächsten Bearbeitungsschritt zu führen. Anschließend werden die Profile sodann geschnitten oder angespritzt.

Aufgabe der Erfindung ist es, den Automatisierungsgrad bei der Fertigung von Profilen erhöhen zu können.

Die Aufgabe wird, ausgehend von einer Anspritzvorrichtung der eingangs genannten Art, durch die Merkmale des Anspruchs 1 gelöst.

Durch die in den abhängigen Ansprüchen genannten Maßnahmen sind vorteilhafte Ausführungen und Weiterbildungen der Erfindung möglich.

Die erfindungsgemäße Anspritzvorrichtung dient zur Bearbeitung von Profilen, an denen zum Beispiel Teilprofile oder Endabschnitte angespritzt werden. Denkbar ist grundsätzlich auch, dass je nach Ausführungsform weitere Bearbeitungsschritte mit integriert sind. Zu diesem Zweck umfasst die Anspritzvorrichtung wenigstens eine Bearbeitungsstation, um dort einen Bearbeitungsschritt auszuführen; insbesondere handelt es sich bei einem derartigen Bearbeitungsschritt um den auszuführenden Anspritzvorgang. Zusätzlich können als Bearbeitungsschritte aber auch zum Beispiel Fertigungsschritte verstanden werden, bei denen das Profil lediglich in der Form platziert und positioniert wird, d.h. Einlegen eines Profils in der Form vorgenommen wird. Denkbar ist auch, analog einen Auswurfvorgang als Bearbeitungsschritt zu bezeichnen, wenn die Profile entsprechend entnommen werden. Darüber hinaus können grundsätzlich, wie bereits dargestellt, weitere Bearbeitungsschritte durchgeführt werden, wie zum Beispiel das Vornehmen von Beschnitten an den Profilen.

Nunmehr zeichnet sich die erfindungsgemäße Anschlussvorrichtung unter anderem dadurch aus, dass ein Drehtisch mit einer Arbeitstischvorrichtung vorgesehen ist. Die Arbeitstischvorrichtung ist der Bereich, der sich um eine Rotationsachse in einer Rotationsebene drehen kann bzw. rotativ verfahrbar ist, um dabei zwischen wenigstens zwei Bearbeitungsbereichen, die auf der Arbeitstischvorrichtung angeordnet sind, wechseln zu können. Jeder Bearbeitungsbereich umfasst dabei eine Mittelplatte, in der ein Profil zur Bearbeitung aufgenommen werden kann. Die Mittelplatte selbst ist jeweils über eine Mittelplattenaufnahme an der entsprechenden Arbeitstischvorrichtung angebracht bzw. gelagert.

Durch das Drehen der Arbeitstischvorrichtung werden die Bearbeitungsbereiche jeweils an die gleichen, genau vorgegebenen Positionen verfahren, an denen eine Bearbeitung des Profils durch eine Bearbeitungsstation erfolgt. Jeder Bearbeitungsbereich wird an jede Position im Laufe des Fertigungsprozesses gefahren. Die Bearbeitungsbereiche sind somit auf einem Kreis bzw. einer Kreislinie um die Rotationsachse herum angeordnet, sodass die Mittelplatten jeweils von einer Bearbeitungsstation zur nächsten verfahrbar sind.

Zur Aufnahme des Profils weisen die Mittelplatten eine Form auf bzw. bilden einen Teil der Form und können somit das Profil seitlich in der Rotationsebene begrenzen.

Um den Anspritzvorgang durchführen zu können, muss das Profil innerhalb der gesamten Form umschlossen sein. Hierzu weist der Drehtisch eine obere und eine untere Form auf, welche erfindungsgemäß von der Rotation der Arbeitstischvorrichtung entkoppelt sind und die in Bezug auf die Rotationsebene einander gegenüberliegend angeordnet sind. Auf diese Weise bilden die obere und untere Form die bewegliche Schließseite, während die Mittelplatte bzw. die Mittelplattenaufnahme die feste Schließseite ausbilden. Ist die Mittelplatte bei einem Ausführungsbeispiel der Erfindung beweglich bzw. schwimmend in der Mittelplattenaufnahme gelagert, so ist entsprechend auch die Mittelplatte selbst eine bewegliche Schließseite. In diesem Fall bildet die feste Schließseite nur die Mittelplattenaufnahme, die unmittelbar an der Arbeitstischvorrichtung befestigt ist.

Die erfindungsgemäße Anspritzvorrichtung besitzt insbesondere den Vorteil, dass die Profile automatisch zugeführt und abgelegt werden können, ohne Zwischenschalten einer Bedienperson. Durch die Ausführungen der Anspritzvorrichtung mit einem Drehtisch wird eine platzsparende und schnelle Fertigung ermöglicht. Die Anordnung auf einen Drehtisch vereinfacht insbesondere auch die Automatisierung, sorgt für eine schnelle Verarbeitung und führt schließlich dazu, dass eine Bedienperson zum Handling der Profile eingespart werden kann. Die automatisierte Einlegung und Entnahme der Profile wird dadurch erleichtert, dass eine dreigeteilte Schließseite bzw. Form vorgesehen ist. Der einzige Teil der Form, der das Profil von Bearbeitungsstation zu Bearbeitungsstation führt, ist die Mittelplatte mit eventuell vorhandenen Einsätzen bzw. Aufnahmeleisten, welche dieses Profil lediglich seitlich begrenzt, was Einlegen und Entnehmen eine biegeschlaffen Profils deutlich erleichtert. Dennoch wird das Profil positionsstabil auf den Weg der Bearbeitung geführt, sodass eine hochpräzise Herstellung der Profile möglich ist.

Insbesondere bietet die Erfindung den Vorteil, dass typischerweise zwischen der Anbringung von Beschnitten und dem eigentlichen Anspritzvorgang ein manuelles Handling der Profile vermieden werden kann und das erfindungsgemäß vorgeschlagene automatisierte Handling diese beiden Bearbeitungsschritte überbrückt. Die Düsenvorrichtung zum eigentlichen Anspritzen an das Profil, also entweder zum Verbinden eines Profils mit einem weiteren Teilprofil oder zum Anspritzen von Profilendabschnitten, kann im Bereich der oberen oder grundsätzlich auch der unteren Form angeordnet sein. In der Regel ist die Düsenvorrichtung an der oberen Form angebracht, während die untere Form die Konturseite bzw. Auswurfseite bildet. In vorteilhafter Weise wird das zu bearbeitende Profil in der Mittelplatte gelagert und von Bearbeitungsstation zu Bearbeitungsstation verfahren. Die obere und untere Form, die für den Anspritzvorgang notwendig sind und somit eine Bearbeitungsstation ausbilden, sind verfahrbar ausgebildet und können in Richtung der Arbeitstischvorrichtung bewegt werden, um das Profil in dieser Bearbeitungsstation zu umschließen und den Anspritzvorgang auszuführen.

Ansonsten ist das Profil, das in der Mittelplatte gelagert ist, doch unabhängig von der oberen und unteren Form und kann relativ zu dieser bewegt werden. Der Automatisierungsgrad kann somit vorteilhafterweise erhöht werden.

Dadurch, dass durch die Erfindung Einlegen bzw. Entnahme des Profils jeweils eine weitere Bearbeitungsstation bilden können, entfällt im Grunde jedoch der Arbeitsplatz einer weiteren Bedienperson, die ansonsten aufwendig und mühsam die Profile in die Form legen bzw. entnehmen muss. Auch der Platzbedarf muss insgesamt durch die erfindungsgemäß vorgeschlagene Anspritzvorrichtung nicht oder nicht wesentlich erhöht werden, weil in vorteilhafter Weise der Anschlussvorgang auf einen Drehtisch platzsparend ausgeführt werden kann.

Bei einer vorteilhaften Ausführungsform der Erfindung ist die Mittelplatte schwimmend in der Mittelplattenaufnahme gelagert, sodass sie durch die Bewegung und den Kontakt mit der beweglichen Schließseite verschiebbar und oder anhebbar ist. Durch die schwimmende Lagerung vereinfacht sich deutlich der Schließprozess der Formen vor dem Anspritzvorgang, zumal obere und untere Form gegen die Mittelplatte von unterschiedlichen Seiten gefahren werden und die Mittelplatte gewissermaßen auch selbst dabei zentrieren. Auf diese Art und Weise kann auch die Bearbeitungsgenauigkeit erhöht und der Positioniervorgang vereinfacht werden. Durch diese schwimmende Lagerung kann zusätzlich das Einlegen bzw. Entnahme von Profilen erleichtert werden. Die Mittelplatte kann sich leicht relativ zum Profil bewegen, was zum Auswerfen genutzt werden kann, da die Mittelplatte über die beweglichen Schließseiten zum Beispiel angehoben werden kann.

Um das Profil auszuwerfen, kann bei einer Weiterbildung der Erfindung ein entsprechender Auswerfer vorgesehen sein, der mechanisch an eine Bewegung des Drehtisches bzw. an eine Bewegung der oberen und/oder unteren Form gekoppelt ist. Eine solche Ausführung erleichtert insbesondere die Automatisierung, weil zwei gleichzeitig stattfindende mechanische Vorgänge bzw. Bewegungen nicht durch unabhängige Antriebe gesteuert werden müssen, sondern zum Beispiel über ein Getriebe miteinander verbunden sind und somit automatisch gleichzeitig ablaufen. Ferner kann dadurch ein zusätzlicher Antrieb eingespart werden, was entsprechende Kostenvorteile mit sich bringt. Auf diese Art und Weise kann auch der Bearbeitungsschritt des Auswerfens in die Automatisierung mit aufgenommen werden.

Die Arbeitstischvorrichtung ist rotativ verfahrbar ausgebildet. Ein Profil, das sich auf der Arbeitstischvorrichtung befindet, genauer gesagt in der Mittelplatte gelagert ist, kann so mit seinem Bearbeitungsbereich von Bearbeitungsstation zu Bearbeitungsstation verfahren werden. In den benachbarten Bearbeitungsbereichen sind jeweils ebenso Profile gelagert, die von Bearbeitungsstation zu Bearbeitungsstation mittels der Drehbewegung der Arbeitstischvorrichtung verfahren werden. Um bei jedem Transportschritt bzw. unmittelbar nach jeder Drehbewegung der Arbeitstischvorrichtung einen Bearbeitungsschritt ausführen zu können, ist es daher vorteilhaft, die Mittelplatten bzw. die Bearbeitungsbereiche jeweils in gleichen Winkelabständen anzuordnen, damit durch die Drehbewegung der Arbeitstischvorrichtung von einer Bearbeitungsstation zur nächsten verfahren wird und somit auch das benachbarte Profil entsprechend von einer Bearbeitungsstation zur nächsten geführt werden kann. Hierdurch können für die Fertigung benötigte Zeit und entsprechend auch Kosten eingespart werden.

Eine Ausführungsvariante einer erfindungsgemäßen Anspritzvorrichtung kann zum Beispiel so ausgebildet sein, dass auf der Arbeitstischvorrichtung drei Bearbeitungsbereiche in gleichen Winkelabständen zueinander angeordnet sind, die also je nach zeitlichem Ablauf so gedreht werden, dass sie nacheinander Bearbeitungen in allen Bearbeitungsstationen ermöglichen. Als Bearbeitungsstation kommen eine Einlegestation, eine Anspritzstation und eine Entnahmestation infrage. Darüber hinaus können grundsätzlich auch noch weitere Bearbeitungsbereiche bzw. Bearbeitungsstationen vorgesehen sein, etwa zur Durchführung einer zweiten Anspritzung, zur Durchführung von Beschnitten oder dergleichen. Insbesondere können zum Profil-Handling (Einlegen oder Entnehmen von Profilen) der jeweiligen Bearbeitungsstation Roboter zugeordnet werden, die zum Beispiel positionsstabil am oder neben dem Drehtisch angeordnet sind und die Profile einlegen oder entnehmen. Dies wird dadurch erleichtert, dass die Arbeitstischvorrichtung gedreht wird und immer die gleiche Mittelplatte für die Positionierung des zu bearbeitenden Profils verwendet wird. Die Arbeitstischvorrichtung stoppt ihre Drehbewegung immer so, dass die Bearbeitungsbereiche jeweils immer an der gleichen Stelle zum Stehen kommen, sodass die Roboter immer das gleiche Handling des Profils durchführen können. Aufgrund der Tatsache, dass ein Drehtisch eingesetzt wird, kann darüber hinaus auch Platz eingespart werden, weil kein Arbeitsbereich für eine Person zur Verfügung gestellt werden muss. Wird wiederum aber ein linearer Aufbau verwendet, bei dem ein linearer Transport von Bearbeitungsstation zu Bearbeitungsstation stattfindet, ist auch insgesamt meist mehr Platz erforderlich.

Die Entnahme eines Profils kann dadurch erleichtert werden, dass zum Beispiel ein Auswerfer vorgesehen ist. Der Auswerfer kann z.B. an die Mittelplatte angreifen und entsprechend anheben oder absenken, was in vorteilhafter Weise auch unmittelbar an eine ohnehin vorhandene Bewegung des Drehtisches bzw. der Formen gekoppelt sein kann. Hierdurch wird nicht nur eine zeitliche Parallelisierung erleichtert, sondern es wird auch ermöglicht, einen weiteren Antrieb kostengünstig einsparen zu können.

Die Mittelplatte selbst wiederum kann zur genauen Führung und positionsstabilen Lagerung von Profilen (biegeschlaffen Profilen oder Carrier-Profilen) auch eine Aufnahmeleiste verwenden. Da eine solche Aufnahmeleiste auch beweglich an der Mittelplatte gelagert sein kann, kann diese auch dazu verwendet werden, beim Auswerfen unterstützend zu wirken. Diese Maßnahme kann grundsätzlich das Handling vereinfachen.

Darüber hinaus können auch Einsätze vorgesehen sein, die an der Mittelplatte angebracht werden, die zum Beispiel beim Anspritzen ein Teil einer Form ausbilden, etwa in dem Anspritzbereich, in dem die Profile miteinander verbunden werden oder wo eine Endanspritzung erfolgt. Diese Einsätze können auch so ausgebildet sein, dass zum Beispiel Positionierpins, Ausnehmungen im Profil oder dergleichen über den Einsatz ihre Formgebung erhalten. Auf diese Weise kann der Fertigungsprozess möglichst flexibel gehandhabt werden.

Um den drehbar gelagerten Bereich der Arbeitstischvorrichtung mit Energie versorgen zu können, kann in vorteilhafter Weise eine kontaktlose Energieübertragung verwendet werden. Insbesondere ist es vorteilhaft, eine induktive Energieübertragung zu nutzen. Auf diese Art und Weise können wartungsanfällige und teure Verschleißkontakte, die zudem die Reibung bei der Bewegung und somit den Energieaufwand deutlich erhöhen, sowie aufwendige Kabelführungen vermieden werden. Ferner wird nicht nur die Energieübertragung zuverlässiger, sondern auch das Arbeiten mit der Maschine grundsätzlich weniger gefährlich, wenn die Energieübertragung zwischen sich relativ zueinander bewegenden Teilen nicht unmittelbar über eine physisch vorhandene Leitung erfolgt, sondern kontaktlos.

Zur Erleichterung der Arbeit mit der Maschine ist es insbesondere von Vorteil, ein Schnellspannsystem vorzusehen, um zum Beispiel die Mittelplatte relativ zur übrigen Arbeitstischvorrichtung, die obere Form relativ zur Düsenvorrichtung bzw. die untere Form relativ zur Konturseite/Auswerferseite zu befestigen und zu zentrieren. Auf diese Art und Weise können einzelne Bestandteile und gerade die Formen, die je nach anzufertigendem Profil ohnehin getauscht werden müssen, schnell gewechselt und ausgetauscht werden. Ein derartiges Schnellspannsystem kann beispielsweise einen Exzenterspannhebel zur kraftschlüssigen Halterung der miteinander zu befestigenden Teile umfassen. Durch Bedienen bzw. Verkippen des Hebels können die entsprechenden Teile bzw. Formen somit befestigt oder gelöst werden. Darüber hinaus können zur Halterung und zur Zentrierung auch Führungen bzw. Anschläge vorgesehen sein. Die zu positionierende Form wird eingeschoben und über Führungen geführt. Die Genauigkeit der Positionierung kann dadurch erhöht werden, dass die Führung z.B. über keilförmige Flächen erfolgt und die Form auch kraftschlüssig gehalten wird. Eine besonders präzise Positionierung kann über Zentrierungsstifte realisiert werden.

Ist zum Beispiel die entsprechenden Form über die Führungsvorrichtung eingebracht, mittels eines Zentrierungsstifts zentriert und durch Kontakt mit einem Anschlag genau positioniert, so kann sie unmittelbar in dieser Position über einen Exzenterspannhebel schnell befestigt werden. Hierdurch wird nicht nur eine mechanisch besonders stabile Befestigung ermöglicht, sondern es wird auch ein schneller Austausch einzelner Bauteile begünstigt.

Grundsätzlich ist es vorteilhaft, für die einzelnen Bearbeitungsbereiche bzw. für die Arbeit mit einzelnen Bearbeitungsstationen eine Kühlung vorzusehen. Eine herkömmliche Drehdurchführung für elektrischen Strom oder für die Hydraulikleitung, d.h. sowohl zur Energieübertragung als auch für die Zu- und Abfuhr eines Kühlmittels, würde eine zentrale Durchführung im Bereich der Rotationsachse mit im Wesentlichen radialen Abgängen erfordern. Eine solche Anordnung wird grundsätzlich aber dadurch erschwert, dass beim Drehtisch das Zentrum, durch welches die Rotationsachse verläuft, nicht verwendet werden kann, weil der Bereich um die Arbeitstischvorrichtung herum zum Beispiel für Roboter zum Handling zugänglich sein muss und somit die im Vergleich zur Arbeitstischvorrichtung fest stehenden Bereiche der Bearbeitungsstation von innen in die Arbeitstischvorrichtung hineinragen bzw. über die Arbeitstischvorrichtung ragen. D. h. dieser Bauraum steht für Drehdurchführung zur Arbeitstischvorrichtung hin nicht zur Verfügung. Gemäß einer besonders bevorzugten Weiterbildung der Erfindung ist zu diesem Zweck ein eigner Kühlkreislauf vorgesehen. Zunächst sind eine ortsfeste Zufuhrleitung und Abfuhrleitung, um das Kühlmittel in jeweiligen Bearbeitungsbereiche zu führen bzw. aus diesen Bereichen wieder abzuführen, vorgesehen.

Diese Zufuhr- und Abfuhrleitung befinden sich am Drehtisch ortsfest an einer bestimmten Position. Beim Drehen der Arbeitstischvorrichtung kann jeder Bearbeitungsbereich an diese entsprechende Position gedreht werden, sodass die Zufuhr- und Abfuhrleitung dort an den Kreislauf angeschlossen sind.

Wird die Arbeitstischvorrichtung weiter gedreht, um das nächste Profil zu dieser Bearbeitungsstation zu bringen, so kann der nächste Bearbeitungsbereich an die Zufuhr- und Abfuhrleitung ankoppeln. Es ist jedoch notwendig, dass grundsätzlich alle Bearbeitungsbereiche mit Kühlmittel versorgt werden. Daher ist es vorteilhaft, den Kühlkreislauf so vorzusehen, dass das Kühlmittel durch die gesamte Arbeitstischvorrichtung herum im Kreis geführt wird. Da aber die Einkopplung durch Zufuhr-und Abfuhrleitung ortsfest erfolgt, das Kühlmittel also nicht immer an der gleichen Stelle in die Arbeitstischvorrichtung eingebracht wird, ist in vorteilhafter Weise bei jedem der Bearbeitungsbereich eine Umschaltvorrichtung vorgesehen um, in Abhängigkeit davon, ob der Bearbeitungsbereich mit der Zufuhr- bzw. Abfuhrleitung verbunden ist, das Kühlmittel nach Leitung durch den Bearbeitungsbereich den nächsten Bearbeitungsbereich oder der Abfuhrleitung zuzuführen.

In vorteilhafter Weise kann dies bei einer Variante der Erfindung durch ein Zweidruckventil realisiert werden. Ein Zweidruckventil entspricht einem 2-Wege-Ventil, bei dem die mit Druck beaufschlagte Leitung einen Weg blockiert und in einem anderen für Durchlass sorgt wird die entsprechend andere Leitung mit Druck beaufschlagt, der höher ist als der Druck auf der anderen Seite der Zufuhrleitung, so wird wiederum der andere Weg durchgeschaltet. Durch das 2-Druck-Ventil kann in vorteilhafter Weise erkannt werden, ob der Kühlbereich in dem jeweiligen Bearbeitungsbereich mit der Zufuhrleitung verbunden ist und somit mit Druck beaufschlagt wird oder nicht. Auf diese Art und Weise erfolgt eine Steuerung bzw. Regelung des Kühlkreislauf automatisch, ohne dass eine gesonderte Kontrollvorrichtung vorhanden ist, da durch die herrschenden Druckverhältnisse das System sich selbst reguliert.

### Ausführungsbeispiele

Ausführungsbeispiele der Erfindung sind in den Zeichnungen dargestellt und werden nachstehend unter Angabe weiterer Einzelheiten und Vorteile näher erläutert. Im Einzelnen zeigen:
- Fig. 1:: eine schematische Darstellung einer Anspritzvorrichtung gem. der Erfindung,
- Fig. 2:: einen schematischen Schnitt durch die Arbeitstischvorrichtung,
- Fig. 3:: eine schematische Darstellung des Kühlkreislaufsystems, sowie
- Fig. 4-6:: schematische Darstellungen des Schnellspannsystems.

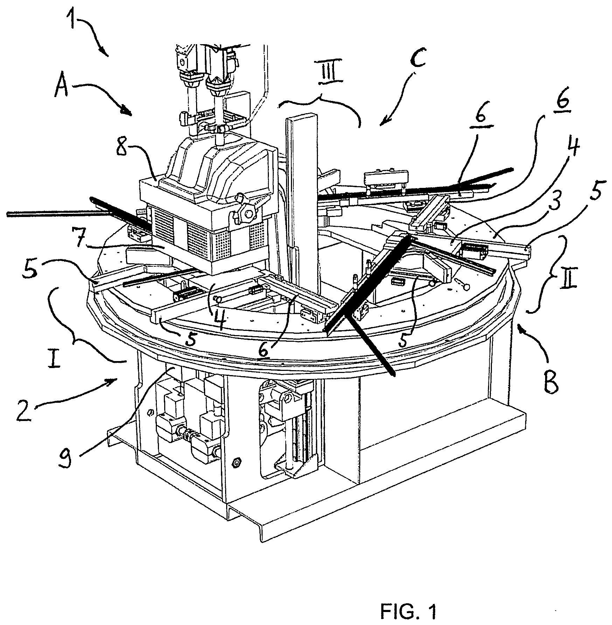

Figur 1 zeigt eine schematische, perspektivische Darstellung einer Anspritzvorrichtung 1 mit einem Drehtisch 2, der wiederum eine Arbeitstischvorrichtung 3 aufweist. Diese Arbeitstischvorrichtung 3 ist relativ zum Rest des Drehtisches 2 drehbar gelagert und rotativ verfahrbar. Die Arbeitstischvorrichtung 3 ist in drei Bearbeitungsbereiche I, II, III unterteilt. Die Bearbeitungsbereiche I, II, III drehen sich mit der Arbeitstischvorrichtung 3 mit. Im Unterschied hierzu sind die Bearbeitungsstationen A, B, C ortsfest angebracht, wobei bei der Rotation der Arbeitstischvorrichtung 3 die Bearbeitungsbereiche I, II, III sich von einer der Bearbeitungsstationen A, B, C zur nächsten bewegen (durchrotieren).

Jeder Bearbeitungsbereich I, II, III ist jeweils mit einer Mittelplatte 4 ausgestattet, die in einer Mittelplattenaufnahme 5 schwimmend gelagert ist. Darüber hinaus sind im Bereich der Mittelplatte 4 Aufnahmeleisten 6 vorgesehen, die zur positionsstabilen Lagerung der Profile dienen und auch das Auswerfen eines Profils erleichtern, da sie beweglich gelagert sind und somit zum Beispiel verkippt werden können.

Die Bearbeitungsstation A ist zum Anspritzen an die Profile vorgesehen (z.B. zur Verbindung mit einem weiteren Teilprofil oder zu einer Endanspritzung). Dazu umfasst sie oberhalb der Arbeitstischvorrichtung 3 eine obere Form 7 mit einer Düsenvorrichtung 8. Beide Vorrichtungen, obere Form 7 und die Düsenvorrichtung 8 sind über ein Schnellspannsystem miteinander verbunden und bilden eine bewegliche Schließseite, nämlich die bewegliche Düsenseite.

Unterhalb der Rotationsebene bzw. unterhalb der Arbeitstischvorrichtung 3 befindet sich die bewegliche Auswerferseite bzw. Konturseite, die eine untere Form 9 umfasst.

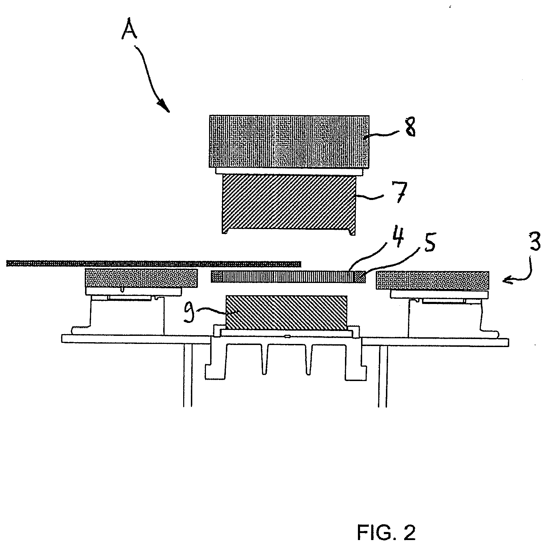

Beim Drehen der Arbeitstischvorrichtung 3 bewegt sich somit jeder Bearbeitungsbereich I, II, III bis alle Bearbeitungsstation A, B, C jeweils angelaufen wurden, und die jeweils pro Bearbeitungsbereich I, II, II gelagerten Profile somit vollständig bearbeitet wurden. Denkbar ist grundsätzlich aber auch, dass mehr als drei Bearbeitungsbereiche bzw. Bearbeitungsstationen vorgesehen sind. Insbesondere sind genauso viele Bearbeitungsbereiche wie Bearbeitungsstationen vorgesehen. Ein schematischer Schnitt durch die Bearbeitungsstation A ist in Figur 2 dargestellt. Der Schnitt verläuft entlang einer Sekante durch die Arbeitstischvorrichtung 3. Die Mittelplatte 4 mit Einsätzen bildet eine Form, die seitlich das zu bearbeitende Profil umschließen kann. Sie ist an der Arbeitstischvorrichtung 3 schwimmend in einer Mittelplattenaufnahme 5 gelagert. Angebracht sind ebenfalls die Profilleisten in den die Profile (biegeschlaffe Profile oder Carrier-Profile) gelagert werden können. Die Mittelplatte 4 wird nach oben und unten jeweils umschlossen von der oberen Form 7 und der Düsenvorrichtung 8, die zusammen die bewegliche Düsenseite bilden, im Bereich unterhalb der Mittelplatte 4 befindet sich wiederum die untere Form 9, welche die Auswerferseite bildet.

In Figur 2 ist die Form geöffnet dargestellt. Zum eigentlichen Anspritzen wird obere und untere Form 7, 9 in Richtung zur Mittelplatte 4 hin verfahren, sodass sich die Form insgesamt schließen kann. Durch eine Berührung mit den Formen kann die Mittelplatte 4, die schwimmend in der Aufnahme 5 gelagert ist, sich etwas bewegen. Die Auswerferseite kann so weit abgesenkt werden, dass diese unter der ringförmigen Arbeitstischvorrichtung 3 entnommen werden kann. Die Mittelplatte 4 und die Düsenvorrichtung 8 können oberhalb der Arbeitstischvorrichtung 3 ausgetauscht werden.

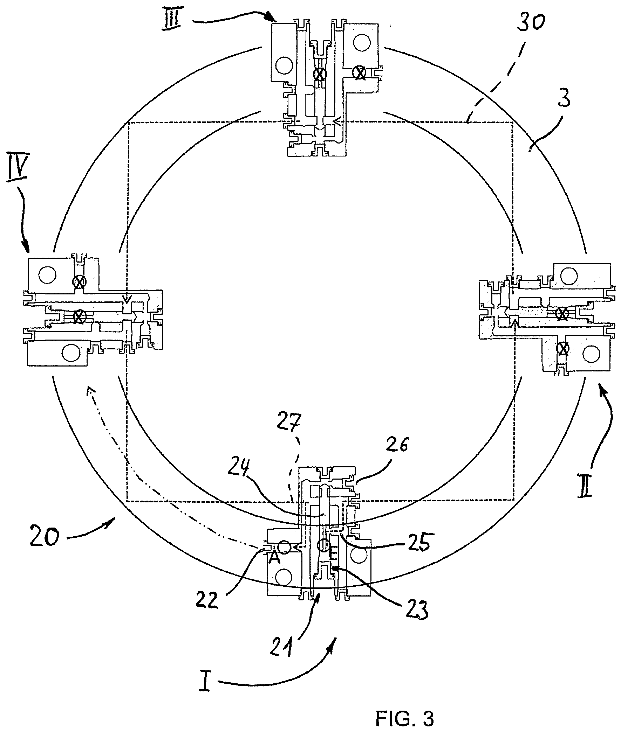

Figur 3 zeigt eine schematische Darstellung des Kühlkreislaufsystems 20. Dabei ist die Arbeitstischvorrichtung 3 wiederum dargestellt. Ferner ist die Zufuhrleitung 21 zu sehen, welche in Figur gerade am Bearbeitungsbereich I anliegt. Bei der vorliegenden Ausführungsform ist eine Arbeitstischvorrichtung 3 mit insgesamt vier Bearbeitungsbereichen I, II, III, IV dargestellt. Die anderen drei Bearbeitungsbereiche II, III, IV sind gerade in dem dargestellten Moment nicht mit Zufuhr- und Abfuhrleitungen 21, 22 verbunden. Das Zweidruckventil 23 umfasst einen Kolben 24, der je nach Druckbeaufschlagung durch die Leitung 21 verschoben wird. Hiervon abzweigend sind zwei Wege 25, 26 dargestellt. Im Bearbeitungsbereich I, der an die Zufuhrleitung 21 angeschlossen ist, wird in dieser Situation der Kolben 24 nach oben verschoben gibt den Fluss in den Weg 25 frei. Das Kühlmittel fließt sodann zur Kühlung durch die Vorrichtung und in den Kreislauf 30.

Der obere Weg 26 ist für den Durchfluss über den Weg 27 wiederum gesperrt. Über den Weg 27 gelangt das Kühlmittel aus dem eigentlichen Kreislauf 30 in den winzigen Bereichs. Im Bearbeitungsbereich I wird das Kühlmittel deswegen zur Ausgangsleitung 22 geführt und kann abgeführt werden.

Bei den Bearbeitungsbereichen II, III, und IV ist umgekehrt der Weg 25 geschlossen, und das Kühlmittel gelangt vom Weg 27 unmittelbar zum Weg 26 und kann weiter durch den Kreislauf 30 von Bearbeitungsstation I, II, III, IV zu Bearbeitungsstation I, II, III, IV fließen.

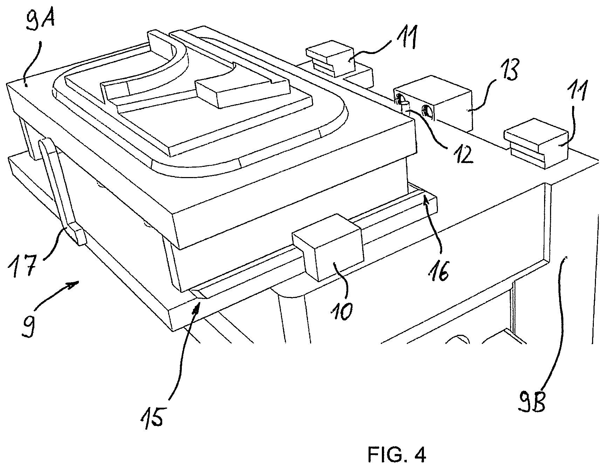

Figur 4 zeigt beispielhaft eine Darstellung der unteren Form 9, wobei die eigentliche Form 9A auf den Maschinentisch 9B zur Montage aufgeschoben wird. Hierzu sind am Maschinentisch 9B Führungen 10 vorgesehen sowie des Weiteren Anschläge 11 am Ende der Einschubstrecke, bis zu denen die Form 9A bewegt werden kann.

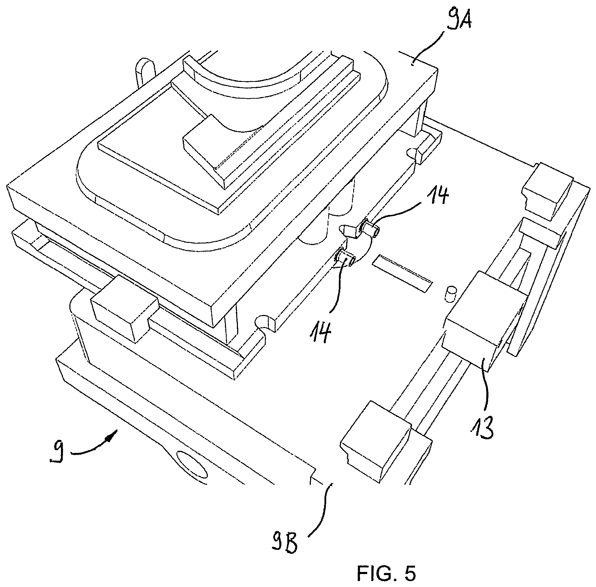

Darüber hinaus ist etwa auf Höhe der Endanschläge 11 ein Zentrierungsstift 12 vorgesehen. Aus Figur 5 wird deutlich, dass eine entsprechende Zentrierung über den Zentrierungsstift 12 nicht nur für die genaue Positionierung der Form 9 an sich wichtig ist, sondern dass auch eine präzise Ankopplung der Leitungen 14 hierdurch gewährleistet werden kann. Zur Formtemperierten (Kühlung) wird eine Medienübergabestation 13 verwendet, mit der das Medium (Kühlmittel) über die Leitungen 14, die von der Medienübergabestation 13 an die Form 9A übergebenen und aus der Form 9A wieder zurückgeleitet wird.

Weiterhin ist in Figur 4 ersichtlich, dass die Form 9A in dem Bereich, in dem sie mit den Führungen 10 bzw. den Anschlägen 11 in Kontakt kommt über Teilflächen 15, 16 verfügt um eine formschlüssige Positionierung zu erreichen. Auch eine Klemmung kann hierdurch grundsätzlich ermöglicht werden.

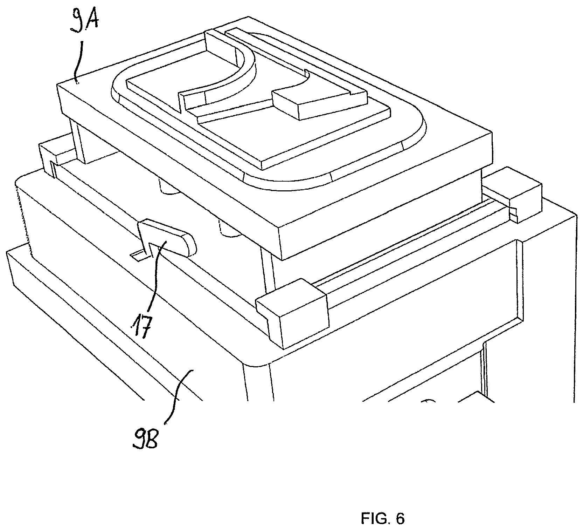

Darüber hinaus ist gem. Figur 6 ein Exzenterspannhebel 17 vorgesehen, der die über die Führungen 10,11 gehaltene Form 9A gegenüber dem Maschinentisch 9B verspannt und dazu in Pfeilrichtung gedreht wird.

Grundsätzlich ist es auch denkbar, zum Beispiel Verriegelungen über Bajonettverschlüsse oder dergleichen vorzusehen.

### Bezugszeichenliste:

1 Anspritzvorrichtung
2 Drehtisch
3 Arbeitstischvorrichtung
4 Mittelplatte
5 Mittelplattenaufnahme
6 Aufnahmeleiste
7 obere Form
8 Düsenvorrichtung
9 untere Form
10 Führung
11 Anschlag
12 Zentrierungsstift
13 Medienübergabe-Station
14 Leitung
15 Teilfläche
16 Teilfläche
17 Exzenterspannhebel
9A Form (auswerferseitig)
9B Maschinentisch
I, II, III, IV Bearbeitungsbereich
A, B, C Bearbeitungsstation
20 Kühlkreislaufsystem
21 Zufuhrleitung
22 Abfuhrleitung
23 Zweidruckventil
24 Kolben
25 Weg
26 Weg
27 Weg
30 Kreislauf

## Patentansprüche

1. Anspritzvorrichtung (1) zur Bearbeitung von Profilen, insbesondere zum Anspritzen von Teilprofilen, Endabschnitten oder dergleichen, umfassend:
• wenigstens eine Bearbeitungsstation (A, B, C), um dort einen Bearbeitungsschritt auszuführen, und
• einen Drehtisch (2) mit einer Arbeitstischvorrichtung (3), die um eine Rotationsachse rotativ in einer Rotationsebene verfahrbar ist und die wenigstens zwei Bearbeitungsbereiche (I, II, III, IV) aufweist, wobei die Bearbeitungsbereiche jeweils eine Mittelplatte (4) umfassen,
• wobei die Mittelplatte (4) jeweils über eine Mittelplattenaufnahme (5) an der Arbeitstischvorrichtung (3) angebracht und/oder gelagert ist,
• wobei die Bearbeitungsbereiche (I, II, III, IV) auf einem Kreis um die Rotationsachse herum angeordnet sind, sodass die Mittelplatten (4) jeweils von einer der Bearbeitungsstationen (A, B, C) zur nächsten verfahrbar sind,
• wobei die Mittelplatten (4) eine Form zur Aufnahme des Profils aufweisen, um das Profil seitlich in der Rotationsebene abzugrenzen,
• wobei der Drehtisch (2) eine obere und eine untere Form (7, 9) umfasst, die von der Rotation der Arbeitstischvorrichtung (3) entkoppelt sind und die in Bezug auf die Rotationsebene einander gegenüberliegend angeordnet sind,
• wobei die obere und untere Form (7, 9)so verfahrbar sind, dass diese zusammen mit der Mittelplatte (4) eine das Profil aufnehmende Form ausbilden und die Mittelplatte (4) und/oder die Mittelplattenaufnahme (5) die feste Schließseite sowie die obere und untere Form die bewegliche Schließseite bilden,
**dadurch gekennzeichnet, dass**
- die Mittelplatte (4) nach oben und unten jeweils umschlossen wird von der oberen Form (7) und der Düsenvorrichtung (8), die zusammen die bewegliche Düsenseite bilden, im Bereich unterhalb der Mittelplatte (4) befindet sich wiederum die untere Form (9), welche die Auswerferseite bildet.

2. Anspritzvorrichtung (1) nach einem der vorgenannten Ansprüche, **dadurch gekennzeichnet, dass** die obere oder die untere Form (7, 9) eine Düsenvorrichtung (8) zum Anspritzen an das Profil und die jeweils andere der beiden Formen, nämlich der oberen und unteren Form, eine Konturseite aufweist, um das Profil nach dem Anspritzen entnehmen zu können.

3. Anspritzvorrichtung (1) nach einem der vorgenannten Ansprüche, **dadurch gekennzeichnet, dass** die Mittelplatte (4) schwimmend in der Mittelplattenaufnahme (5) gelagert ist, sodass sie durch die Bewegung und den Kontakt mit der beweglichen Schließseite verschiebbar und/oder anhebbar ist.

4. Anspritzvorrichtung (1) nach einem der vorgenannten Ansprüche, **dadurch gekennzeichnet, dass** ein Auswerfer vorgesehen ist, um das Profil zur Entnahme auszuwerfen, der mechanisch an eine Bewegung der oberen Form und/oder der unteren Form gekoppelt ist.

5. Anspritzvorrichtung (1) nach einem der vorgenannten Ansprüche, **dadurch gekennzeichnet, dass** die Mittelplatten (4) und die Bearbeitungsbereiche (I, II, III, IV) jeweils in gleichen Winkelabständen angeordnet sind.

6. Anspritzvorrichtung (1) nach einem der vorgenannten Ansprüche, **dadurch gekennzeichnet, dass** wenigstens eine weitere Bearbeitungsstation (B, C) vorgesehen ist, welche als Einlegebereich zum Einlegen des Profils und/oder eines Teilprofils als Bestandteil des Profils ausgebildet ist.

7. Anspritzvorrichtung (1) nach einem der vorgenannten Ansprüche, **dadurch gekennzeichnet, dass** wenigstens eine weitere Bearbeitungsstation (B, C) vorgesehen ist, welche als Entnahmebereich zur Entnahme des Profils und/oder eines Teilprofils als Bestandteil des Profils ausgebildet ist.

8. Anspritzvorrichtung (1) nach einem der vorgenannten Ansprüche, **dadurch gekennzeichnet, dass** die Bearbeitungsstation (B, C) und/oder wenigstens eine der Bearbeitungsstationen einen Roboter zum Einlegen und/oder zur Entnahme des Profils und/oder des Teilprofils umfasst.

9. Anspritzvorrichtung (1) nach einem der vorgenannten Ansprüche, **dadurch gekennzeichnet, dass** die Mittelplatte (4) wenigstens eine Aufnahmeleiste (6) zur positionsstabilen Lagerung des Profils und/oder eines Teilprofils als Bestandteil des Profils aufweist.

10. Anspritzvorrichtung (1) nach einem der vorgenannten Ansprüche, **dadurch gekennzeichnet, dass** die Mittelplatte (4) wenigstens einen Einsatz aufweist.

11. Anspritzvorrichtung (1) nach einem der vorgenannten Ansprüche, **dadurch gekennzeichnet, dass** der Drehtisch (2) eine Energieübertragungsvorrichtung zur kontaktlosen Energieübertragung zur Arbeitstischvorrichtung aufweist, insbesondere zur induktiven Energieübertragung.

12. Anspritzvorrichtung (1) nach einem der vorgenannten Ansprüche, **dadurch gekennzeichnet, dass** wenigstens ein Schnellspannsystem vorgesehen ist, um:
• die Mittelplatte relativ zur übrigen Arbeitstischvorrichtung und/oder
• die obere Form relativ zur Düsenvorrichtung und/oder
• die untere Form relativ zur Konturseite und/oder Auswerferseite
jeweils zu befestigen und/oder zu zentrieren, wobei das wenigstens eine Schnellspannsystem insbesondere umfasst:
• einen Exzenterspannhebel (17) zur kraftschlüssigen Halten der miteinander zu befestigen den Teile und/oder
• eine Führungsvorrichtung (10, 11) mit keilförmig geformten Flächen zur Ausrichtung und kraftschlüssigen Befestigung und/oder
• wenigstens einen Zentrierungsanschlag (12) zur Ausrichtung und Zentrierung.

13. Anspritzvorrichtung (1) nach einem der vorgenannten Ansprüche, **dadurch gekennzeichnet, dass** ein Kühlkreislauf (20) zur Kühlung der Bearbeitungsstationen vorgesehen ist, wobei jeweils eine in Bezug zur Arbeitstischvorrichtung ortsfeste Zufuhr- und Abfuhrleitung, um das Kühlmittel im Bereich eines der Bearbeitungsbereiche in die Arbeitstischvorrichtung einzuspeisen und aus der Arbeitstischvorrichtung abzuführen, und eine Verbindungsleitung, mit der das Kühlmittel den einzelnen Bearbeitungsbereichen (I, II, III, IV), insbesondere in Serie geschaltet, zuführbar ist, vorgesehen sind, wobei jeder der Bearbeitungsbereiche eine Umschaltvorrichtung aufweist, um in Abhängigkeit davon, ob der Bearbeitungsbereich mit der Zufuhr- und Abfuhrleitung (21, 22) verbunden ist, das Kühlmittel nach Leitung durch den Bearbeitungsbereich dem nächsten Bearbeitungsbereich oder der Abfuhrleitung zuzuführen.

14. Anspritzvorrichtung (1) nach Anspruch 13, **dadurch gekennzeichnet, dass** in jedem Bearbeitungsbereich (I, II, III, IV) wenigstens ein Zweidruckventil (23) vorgesehen ist, um bei Druckbeaufschlagung über die Zufuhrleitung die Verbindung zwischen Verbindungsleitung und Abfuhrleitung zu öffnen und anderenfalls zu schließen.

15. Anspritzvorrichtung nach einem der vorgenannten Ansprüche, **dadurch gekennzeichnet, dass** wenigstens eine der Bearbeitungsstationen dazu ausgebildet ist, das Profil und/oder wenigstens ein Teilprofil zu schneiden.

## Claims

1. Overmoulding device (1) for processing profiles, in particular for overmoulding partial profiles, end portions or the like, comprising:
• at least one processing station (A, B, C) for carrying out a processing step there, and
• a turntable (2) with a worktable device (3) that is movable in rotation about an axis of rotation in a rotation plane and has at least two processing areas (I, II, III, IV), wherein the processing areas each comprise a central plate (4),
• wherein the central plate (4) is attached to and/or mounted on the worktable device (3) in each case via a central-plate receptacle (5),
• wherein the processing areas (I, II, III, IV) are arranged in a circle about the axis of rotation such that the central plates (4) are each movable from one of the processing stations (A, B, C) to the next,
• wherein the central plates (4) have a mould for receiving the profile, in order to laterally delimit the profile in the rotation plane,
• wherein the turntable (2) comprises an upper and a lower mould (7, 9), which are decoupled from the rotation of the worktable device (3) and which are arranged opposite one another with regard to the rotation plane,
• wherein the upper and lower mould (7, 9) are movable such that, together with the central plate (4), they form a mould receiving the profile, and the central plate (4) and/or the central-plate receptacle (5) form the fixed closing side and the upper and lower moulds form the movable closing side,
**characterized in that**
- the central plate (4) is enclosed upwardly and downwardly in each case by the upper mould (7) and the nozzle device (8), which together form the movable nozzle side, and located in the region beneath the central plate (4) is, in turn, the lower mould (9), which forms the ejector side.

2. Overmoulding device (1) according to one of the preceding claims, **characterized in that** the upper or the lower mould (7, 9) has a nozzle device (8) for overmoulding on the profile and the other one in each case of the two moulds, namely the upper and lower mould, has a contour side, in order for it to be possible to remove the profile after overmoulding.

3. Overmoulding device (1) according to one of the preceding claims, **characterized in that** the central plate (4) is mounted in a floating manner in the central-plate receptacle (5) such that it is able to be displaced and/or raised as a result of the movement and contact with the movable closing side.

4. Overmoulding device (1) according to one of the preceding claims, **characterized in that** an ejector is provided in order to eject the profile for removal, said ejector being mechanically coupled to a movement of the upper mould and/or of the lower mould.

5. Overmoulding device (1) according to one of the preceding claims, **characterized in that** the central plates (4) and the processing areas (I, II, III, IV) are in each case arranged at equal angular spacings.

6. Overmoulding device (1) according to one of the preceding claims, **characterized in that** at least one further processing station (B, C) is provided, which is configured as an insertion area for inserting the profile and/or a partial profile as a part of the profile.

7. Overmoulding device (1) according to one of the preceding claims, **characterized in that** at least one further processing station (B, C) is provided, which is configured as a removal area for removing the profile and/or a partial profile as part of the profile.

8. Overmoulding device (1) according to one of the preceding claims, **characterized in that** the processing station (B, C) and/or at least one of the processing stations comprises a robot for inserting and/or removing the profile and/or the partial profile.

9. Overmoulding device (1) according to one of the preceding claims, **characterized in that** the central plate (4) has at least one receiving strip (6) for mounting the profile and/or a partial profile as part of the profile in a stable position.

10. Overmoulding device (1) according to one of the preceding claims, **characterized in that** the central plate (4) has at least one insert.

11. Overmoulding device (1) according to one of the preceding claims, **characterized in that** the turntable (2) has an energy-transfer device for contactless energy transfer to the worktable device, in particular for inductive energy transfer.

12. Overmoulding device (1) according to one of the preceding claims, **characterized in that** at least one quick-clamping system is provided in order to respectively fasten and/or centre:
• the central plate relative to the rest of the worktable device and/or
• the upper mould relative to the nozzle device and/or
• the lower mould relative to the contour side and/or ejector side,
wherein the at least one quick-clamping system comprises in particular:
• an eccentric clamping lever (17) for holding, in a force-fitting manner, the parts that are to be fastened together and/or
• a guide device (10, 11) having faces moulded in a wedge shape for orienting and fastening in a force-fitting manner and/or
• at least one centring stop (12) for orienting and centring.

13. Overmoulding device (1) according to one of the preceding claims, **characterized in that** a coolant circuit (20) for cooling the processing stations is provided, wherein respective supply and drain lines that are positionally fixed with respect to the worktable device, in order to feed the coolant into the worktable device and to drain it from the worktable device in the region of one of the processing areas, and a connecting line with which the coolant is able to be fed to the individual processing areas (I, II, III, IV), in particular connected in series, are provided, wherein each of the processing areas has a switchover device in order, depending on whether the processing area is connected to the supply and drain lines (21, 22), to feed the coolant, after passing through the processing area, to the next processing area or the drain line.

14. Overmoulding device (1) according to Claim 13, **characterized in that** at least one two pressure valve (23) is provided in each processing area (I, II, III, IV) in order, when pressurized via the supply line, to open the connection between the connecting line and drain line and otherwise to close it.

15. Overmoulding device according to one of the preceding claims, **characterized in that** at least one of the processing stations is configured to cut the profile and/or at least a partial profile.

## Revendications

1. Dispositif de moulage par injection (1) pour le traitement de profilés, en particulier pour le moulage par injection de profilés partiels, de sections d'extrémité ou similaires, comprenant :
• au moins un poste de traitement (A, B, C) pour y effectuer une étape de traitement, et
• une table tournante (2) avec un dispositif de table de travail (3) mobile en rotation autour d'un axe de rotation dans un plan de rotation et présentant au moins deux zones de traitement (I, II, III, IV), les zones de traitement comprenant chacune une plaque centrale (4),
• la plaque centrale (4) étant fixée et/ou montée sur le dispositif de table de travail (3) par l'intermédiaire d'un logement de plaque centrale (5),
• les zones de traitement (I, II, III, IV) étant disposées sur un cercle autour de l'axe de rotation, de sorte que les plaques centrales (4) sont chacune mobiles d'un poste de traitement (A, B, C) au suivant,
• les plaques centrales (4) présentant une forme destinée à recevoir le profilé afin de délimiter latéralement le profilé dans le plan de rotation,
• la table tournante (2) comprend un moule supérieur et un moule inférieur (7, 9) qui sont découplés de la rotation du dispositif de table de travail (3) et qui sont disposés l'un en face de l'autre par rapport au plan de rotation,
• les moules supérieur et inférieur (7, 9) étant mobiles de telle sorte qu'ils forment, avec la plaque centrale (4), un moule recevant le profilé et la plaque centrale (4) et/ou le logement de plaque centrale (5) forment le côté de fermeture fixe et les moules supérieur et inférieur forment le côté de fermeture mobile,
**caractérisé en ce que**
- la plaque centrale (4) est entourée vers le haut et vers le bas respectivement par le moule supérieur (7) et le dispositif à buse (8), qui forment ensemble le côté de buse mobile, tandis que dans la zone située sous la plaque centrale (4) se trouve le moule inférieur (9), qui forme le côté éjecteur.

2. Dispositif d'injection (1) selon l'une des revendications précédentes, **caractérisé en ce que** le moule supérieur ou inférieur (7, 9) comporte un dispositif à buse (8) pour l'injection sur le profilé et l'autre des deux moules, à savoir le moule supérieur et inférieur, comporte un côté de contour afin de pouvoir retirer le profilé après l'injection.

3. Dispositif de moulage par injection (1) selon l'une des revendications précédentes, **caractérisé en ce que** la plaque centrale (4) est montée flottante dans le logement de plaque centrale (5) de manière à pouvoir être déplacée et/ou soulevée par le mouvement et le contact avec le côté de fermeture mobile.

4. Dispositif de moulage par injection (1) selon l'une des revendications précédentes, **caractérisé en ce qu'**un éjecteur est prévu pour éjecter le profilé à retirer, lequel est couplé mécaniquement à un mouvement du moule supérieur et/ou du moule inférieur.

5. Dispositif de moulage par injection (1) selon l'une des revendications précédentes, **caractérisé en ce que** les plaques centrales (4) et les zones de traitement (I, II, III, IV) sont disposées à des distances angulaires égales.

6. Dispositif de moulage par injection (1) selon l'une des revendications précédentes, **caractérisé en ce qu'**il est prévu au moins un poste de traitement supplémentaire (B, C) qui est réalisé sous la forme d'une zone d'insertion pour l'insertion du profilé et/ou d'un profilé partiel en tant que constituant du profilé.

7. Dispositif de moulage par injection (1) selon l'une des revendications précédentes, **caractérisé en ce qu'**il est prévu au moins un poste de traitement supplémentaire (B, C) qui est réalisé sous la forme d'une zone de retrait pour le retrait du profilé et/ou d'un profilé partiel en tant que constituant du profilé.

8. Dispositif de moulage par injection (1) selon l'une des revendications précédentes, **caractérisé en ce que** le poste de traitement (B, C) et/ou au moins l'un des postes de traitement comprend un robot pour insérer et/ou retirer le profilé et/ou le profilé partiel.

9. Dispositif de moulage par injection (1) selon l'une des revendications précédentes, **caractérisé en ce que** la plaque centrale (4) présente au moins une baguette de réception (6) pour le montage stable en position du profilé et/ou d'un profilé partiel en tant que constituant du profilé.

10. Dispositif de moulage par injection (1) selon l'une des revendications précédentes, **caractérisé en ce que** la plaque centrale (4) présente au moins un insert.

11. Dispositif de moulage par injection (1) selon l'une des revendications précédentes, **caractérisé en ce que** la table tournante (2) présente un dispositif de transmission d'énergie pour la transmission d'énergie sans contact au dispositif de table de travail, en particulier pour la transmission d'énergie inductive.

12. Dispositif de moulage par injection (1) selon l'une des revendications précédentes, **caractérisé en ce qu'**au moins un système de serrage rapide est prévu pour respectivement fixer et/ou centrer :
• la plaque centrale par rapport au reste du dispositif de table de travail et/ou
• le moule supérieur par rapport au dispositif à buse et/ou
• le moule inférieur par rapport au côté de contour et/ou au côté éjecteur
l'au moins un système de serrage rapide comprenant notamment :
• un levier de serrage excentrique (17) destiné à maintenir les pièces à fixer les unes aux autres par force et/ou
• un dispositif de guidage (10, 11) présentant des surfaces cunéiformes pour l'alignement et la fixation par force et/ou
• au moins une butée de centrage (12) pour l'alignement et le centrage.

13. Dispositif d'injection (1) selon l'une des revendications précédentes, **caractérisé en ce qu'**un circuit de refroidissement (20) est prévu pour refroidir les postes de traitement, il étant respectivement prévu une conduite d'amenée et d'évacuation fixe par rapport au dispositif de table de travail pour alimenter le liquide de refroidissement dans le dispositif de table de travail et l'évacuer du dispositif de table de travail dans la zone de l'une des zones de traitement, et une conduite de liaison avec laquelle le liquide de refroidissement est amené dans les zones de traitement (I, II, III, IV) individuelles, en particulier en série, chacune des zones de traitement comportant un dispositif de commutation pour amener le liquide de refroidissement, selon que la zone de traitement est reliée à la conduite d'amenée et d'évacuation (21, 22), vers la zone de traitement suivante ou vers la conduite d'évacuation après le passage dans la zone de traitement.

14. Dispositif de moulage par injection (1) selon la revendication 13, **caractérisé en ce qu'**au moins une soupape à double pression (23) est prévue dans chaque zone de traitement (I, II, III, IV) afin d'ouvrir la liaison entre la conduite de liaison et la conduite d'évacuation en cas de mise sous pression via la conduite d'amenée et de la fermer dans le cas contraire.

15. Dispositif de moulage par injection selon l'une des revendications précédentes, **caractérisé en ce qu'**au moins l'un des postes de traitement est conçu pour découper le profilé et/ou au moins un profilé partiel.
